(19) Europäisches Patentamt
European Patent Office
Office européen des brevets

(11) **EP 0 935 301 B1**

(12) **FASCICULE DE BREVET EUROPEEN**

(45) Date de publication et mention de la délivrance du brevet:
**19.11.2003 Bulletin 2003/47**

(51) Int Cl.⁷: **H01M 4/32**, H01M 4/62

(21) Numéro de dépôt: **99400249.1**

(22) Date de dépôt: **04.02.1999**

(54) **Electrode positive au nickel pour accumulateur alcalin**

Positive Nickelelektrode für alkalische Speicherbatterie

Positive nickel electrode for alcaline accumulator

(84) Etats contractants désignés:
**DE FR GB**

(30) Priorité: **09.02.1998 FR 9801468**

(43) Date de publication de la demande:
**11.08.1999 Bulletin 1999/32**

(73) Titulaire: **ALCATEL**
**75008 Paris (FR)**

(72) Inventeurs:
• **Bernard, Patrick**
**91300 Massy (FR)**
• **Audry, Claudette**
**91300 Massy (FR)**

(74) Mandataire: **Korakis-Ménager, Sophie et al**
**Compagnie Financière Alcatel**
**Département de Propriété Industrielle,**
**5, rue Noel Pons**
**92734 Nanterre Cedex (FR)**

(56) Documents cités:
**EP-A- 0 587 974**      **EP-A- 0 634 804**
**EP-A- 0 658 948**      **US-A- 4 367 208**

• YUNCHANG D ET AL: "A STUDY OF THE PERFORMANCE OF A PASTE-TYPE NICKEL CATHODE" JOURNAL OF POWER SOURCES, vol. 56, no. 2, 1 août 1995, pages 201-204, XP000589879
• CHEMICAL ABSTRACTS, vol. 84, no. 22, 31 mai 1976 Columbus, Ohio, US; abstract no. 153085, MUKUNOKI, JUNJI ET AL: "Cathode for alkaline batteries" XP002081989 & JP 50 092427 A (MATSUSHITA ELECTRIC INDUSTRIAL CO., LTD., JAPAN)
• DATABASE WPI Section Ch, Week 9515 Derwent Publications Ltd., London, GB; Class A26, AN 95-110329 XP002081848 & JP 07 033420 A (TOHO RAYON KK) , 3 février 1995 -& PATENT ABSTRACTS OF JAPAN vol. 95, no. 5, 30 juin 1995 & JP 07 033420 A (TOHO RAYON CO LTD), 3 février 1995
• TAKESHIMA H ET AL: "STUDY ON A CONDUCTIVE MATERIAL FOR NICKEL POSITIVE ELECTRODE" EXTENDED ABSTRACTS FALL MEETING OCTOBER 8/13 1995, ST. LOUIS, MISSOURI, vol. 95/2, 1995, page 172 XP000553887
• PATENT ABSTRACTS OF JAPAN vol. 097, no. 005, 30 mai 1997 & JP 09 007587 A (MATSUSHITA ELECTRIC IND CO LTD), 10 janvier 1997
• M. BREGAZZI: "Acetylene Black" ELECTROCHEMICAL TECHNOLOGY., vol. 5, no. 11-12, 1967, pages 507-513, XP002081942 PRINCETON, NEW JERSEY US

**Description**

La présente invention concerne une électrode au nickel utilisée notamment comme électrode positive pour accumulateur à électrolyte alcalin. Elle s'étend en outre à son procédé de préparation.

Il existe plusieurs types d'électrodes susceptibles d'être utilisées dans un accumulateur à électrolyte alcalin, comme une électrode de type pochette ou une électrode frittée. Pour répondre au besoin croissant des utilisateurs, ces électrodes peuvent aujourd'hui être réalisées de manière empâtée. Par rapport aux autres types d'électrode, une électrode empâtée contient une plus grande quantité de matière, sa capacité volumique est donc augmentée, et son coût de fabrication est plus faible.

Une électrode au nickel empâtée est réalisée par un dépôt d'une pâte sur un support conducteur bidimensionnel comme un métal déployé, une grille, un tissu ou un feuillard plein ou perforé, ou bien dans un support conducteur tridimensionnel poreux, comme un feutre ou une mousse métallique ou en carbone. Dans cette structure est introduite une pâte comportant comme constituants principaux la matière active, habituellement sous forme de poudre, et un liant polymère, auxquels on ajoute le plus souvent un matériau conducteur. Lors de la fabrication de l'électrode, un solvant volatil est ajouté à la pâte pour ajuster sa viscosité afin de faciliter la mise en forme. Une fois la pâte déposée sur ou dans le support, l'ensemble est comprimé et séché pour obtenir une électrode de la densité et de l'épaisseur souhaitées.

Dans une électrode de nickel empâtée, la matière active est constituée d'un hydroxyde à base de nickel. L'hydroxyde de nickel est un composé peu conducteur qui nécessite l'adjonction dans l'électrode d'un matériau permettant une bonne percolation électrique. La pâte contient donc généralement un matériau conducteur qui peut être par exemple un composé du cobalt, tel que du cobalt métallique Co, un hydroxyde de cobalt $Co(OH)_2$ et/ou un oxyde de cobalt CoO. Lors de la première charge de l'accumulateur alcalin, ces composés sont oxydés en oxyhydroxyde de cobalt CoOOH dans lequel le cobalt est porté au degré d'oxydation +3. Cet oxyhydroxyde de cobalt est stable dans le domaine normal de fonctionnement de l'électrode positive au nickel et insoluble dans l'électrolyte alcalin. Il assure la percolation électrique de l'électrode.

Stocké à l'état complètement déchargé, un accumulateur alcalin possédant une électrode positive au nickel empâtée voit sa tension décroître avec le temps. Lorsque la durée du stockage dépasse quelques mois, sa tension tend vers 0V. Dans ces conditions, l'oxyhydroxyde de cobalt se réduit lentement. Le cobalt est porté d'abord au degré d'oxydation +2,66 dans $Co_3O_4$, puis il atteint le degré d'oxydation +2 dans $Co(OH)_2$, et atteint le degré d'oxydation 0 dans Co.

Or l'hydroxyde de cobalt $Co(OH)_2$ est un composé très soluble dans l'électrolyte. Par conséquent on observe après une période de stockage de plusieurs mois, une perte de la conductivité due à la dissolution partielle du réseau percolant de l'électrode empâtée. Ce phénomène conduit à la redistribution de manière hétérogène du cobalt présent dans l'électrode positive, et à une augmentation préférentielle des particules de cobalt de grande dimension au détriment des petites. Il en résulte une perte irréversible de capacité qui peut dépasser 20 %. Cette perte irréversible de capacité se produit quel que soit le composé de cobalt initialement introduit dans la pâte.

La demande de brevet européen EP 0 634 804 propose d'accroître la conductivité de l'électrode positive en introduisant dans la pâte une poudre de carbone ayant une distance interéticulaire d002 telle que 0,335 nm < d002 < 0,345 nm.

La demande de brevet européen EP-A-0 658 948 propose l'utilisation d'un graphite de taille de cristallite de 2000Å et dont la teneur en cendre est inférieure à 0,5 %. Toutefois, il est bien connu que les graphites présentent des tailles de particules très importantes, supérieures au micron, voir à la dizaine de microns qui rendent leur utilisation impropre en accumulateur de haute densité d'énergie. En effet, pour obtenir une bonne conductivité de l'électrode, il serait nécessaire d'ajouter une quantité rédhibitoire de conducteur.

La présente invention a pour but de proposer une électrode empâtée qui ne présente pas de perte irréversible de capacité en stockage par rapport aux électrodes actuellement connues.

L'objet de la présente invention est une électrode au nickel empâtée pour accumulateur à électrolyte alcalin comportant un collecteur de courant et une matière active à base d'hydroxyde de nickel sous forme pulvérulente et un conducteur à base de carbone, caractérisée par le fait que ledit conducteur à base de carbone est formé de particules de carbone résistant à l'oxydation électrochimique et répondant à la relation

W > 0,025 exprimé en $10^{-9}$ g/m avec
W = TC002/S x G où

- TC002 est la taille de cristallite [002] du diagramme de diffraction des rayons X, exprimée en nanomètres
- S est la surface spécifique des particules exprimée en $m^2/g$
- G est le coefficient de graphitation du carbone défini comme :

$$G = (d002-0,3354) / (0,3450 - 0,3354)$$

- d002 est la distance réticulaire dans la direction 002 en nanomètres.
  lesdites particules ayant une forme choisie parmi
- une forme sensiblement sphérique, leur diamètre moyen $D_1$ étant inférieur ou égale à D/20, et
- une forme de fibres, leur diamètre moyen $D_2$ étant inférieur ou égal à D et leur longueur moyenne $L_2$ étant supérieure ou égale à 25 fois la valeur de $D_2$,

D étant le diamètre moyen des grains de poudre de ladite matière active.

Le diagramme de diffraction X est réalisé dans les conditions suivantes :

tension du tube : 40 kV
courant du tube : 30mA
vitesse de balayage : 0,9 degré/min
raie $K\alpha$ du cuivre : 0,154nm.

De préférence, lesdites particules de carbone représentent une proportion comprise entre 4 et 15 % de la matière active de l'électrode positive au nickel. Au delà de cette valeur, la capacité volumique de l'électrode diminue du fait de la grande proportion de conducteur dans l'électrode.

On entend par particules de carbone des particules de toute forme, pouvant aller d'une forme plus ou moins sphérique à une forme complètement irrégulière, et à des fibres.

Dans le cas où les particules ont une forme sensiblement sphérique, leur diamètre moyen $D_1$ est inférieur ou égale à D/20, D étant le diamètre moyen des grains de poudre de ladite matière active, avec D avantageusement compris entre 5 et 15 $\mu$m.

De préférence, $D_1$ est inférieur ou égal à D/100, et en particulier inférieur ou égal à 0,1 $\mu$m.

Dans le cas où les particules ont une forme de fibres, leur diamètre moyen $D_2$ est inférieur ou égal à D et leur longueur moyenne $L_2$ est supérieure ou égale à 25 fois la valeur de $D_2$.

De préférence $L_2$ est supérieure ou égale à 75 fois la valeur de $D_2$.

Il est bien entendu que le terme "hydroxyde de nickel" utilisé dans la présente demande signifie aussi bien un hydroxyde de nickel qu'un hydroxyde contenant principalement du nickel mais également au moins un hydroxyde syncristallisé d'un élément choisi parmi le cobalt, le manganèse et au moins un hydroxyde syncristallisé d'un élément choisi parmi le cadmium, le zinc, le magnésium, le calcium, l'yttrium, le cuivre, l'aluminium.

Selon un mode de réalisation de l'électrode selon l'invention, le collecteur de courant est une mousse de nickel, et ladite pâte contient ladite matière active, lesdits conducteurs, un premier liant à base de polytétrafluoroéthylène (PTFE) et un deuxième liant choisi parmi la carboxyméthylcellulose (CMC), l'hydroxypropylméthylcellulose (HPMC), l'hydroxyethylcellulose (HEC), l'hydroxypropylcellulose (HPC), le polyfluorure de vinylidène (PVDF), le styrène butadiene rubber SBR.

L'invention sera mieux comprise et d'autres avantages et particularités apparaîtront à la lecture des exemples suivants de réalisation, donnés à titre illustratif et non limitatif.

Exemple 1 :

Des électrodes de nickel standard "a" ne faisant pas partie de l'invention sont réalisées en utilisant une pâte dont la composition exprimée en pourcentage pondéral par rapport au poids de la pâte est approximativement la suivante :

- poudre d'hydroxyde dont le diamètre moyen D est de 12$\mu$m, composé majoritairement de nickel, contenant environ 2 % d'hydroxyde de cobalt syncristallisé et environ 3 % d'hydroxyde de zinc syncristallisé : 66 %,
- cobalt métal : 1 %
- oxyde de cobalt CoO : 5 %
- eau : 26,2 %
- gel à base de CMC : 0,3 %
- PTFE : 1,5 %.

La pâte ainsi obtenue est introduite dans une mousse de nickel de porosité environ 95 %. L'ensemble est séché puis laminé pour obtenir des électrodes "a".

Exemple 2 :

Selon l'invention, on met en oeuvre des fibres de carbone dont la taille de cristallite dans la direction 002 (TC002) est 2,5nm, dont le coefficient de graphitation G est 0,77, et dont la surface spécifique S est 0,5 m$^2$/g. On comprend que le coefficient W vaut W = 2,5/077 x 0,5 ; c'est-à-dire W = 6,5 x 10$^{-9}$ g/m.

Les fibres ont un diamètre moyen $D_2$ égal à 6 µm et une longueur moyenne $L_2$ égale à 200 µm.

Des électrodes de nickel "b" sont réalisées en utilisant une pâte dont la composition exprimée en pourcentage pondéral par rapport au poids de la pâte est approximativement la suivante :

- poudre d'hydroxyde dont le diamètre moyen D est de 12µm, composé majoritairement de nickel, contenant environ 2 % d'hydroxyde de cobalt syncristallisé et environ 3 % d'hydroxyde de zinc syncristallisé : 66 %,
- fibres de carbone selon l'invention : 8 %,
- eau : 28 %
- gel à base de CMC : 0,3 %
- PTFE : 1,7 %

Exemple 3 :

Selon l'invention on met en oeuvre des fibres de carbone dont la taille de cristallite dans la direction 002 (TC002) est 1,2 nm, dont le coefficient graphitation G est 1,42 et dont la surface spécifique S est 0,6 m$^2$/g. En consé-quence W = 1,4 x 10$^{-9}$ g/m.

Les fibres ont un diamètre moyen $D_2$ égal à 8 µm et une longueur moyenne $L_2$ égale à 250 µm.

Des électrodes de nickel "c" sont réalisées en utilisant une pâte dont la composition exprimée en pourcentage pondéral par rapport au poids de la pâte est approximativement la suivante :

- poudre d'hydroxyde dont le diamètre moyen D est de 12µm, composé majoritairement de nickel, contenant environ 2 % d'hydroxyde de cobalt syncristallisé et environ 3 % d'hydroxyde de zinc syncristallisé : 66 %,
- fibres de carbone selon l'invention : 8 %
- eau : 28 %
- gel à base de CMC : 0,3 %
- PTFE : 1,7 %

Exemple 4 :

Selon l'invention on met en oeuvre une poudre de carbone dont la taille de cristallite dans la direction 002 (TC002) est 2,3 nm, dont le coefficient de graphitation G est 1,18 et dont la surface spécifique S est 70 m$^2$/g. En conséquence W = 0,028 x 10$^{-9}$ g/m.

Le diamètre moyen $D_1$ des particules de poudre est de l'ordre de 35 nm.

Des électrodes de nickel "d" sont réalisées en utilisant une pâte dont la composition exprimée en pourcentage pondéral par rapport au poids de la pâte est approximativement la suivante :

- poudre d'hydroxyde dont le diamètre moyen D est de 12 µm, composé de nickel, contenant environ 2 % d'hydroxyde de cobalt syncristallisé et environ 3 % d'hydroxyde de zinc syncristallisé : 66 %
- poudre de carbone selon l'invention : 8 %
- eau : 28 %
- un gel à base de CMC : 0,3 %
- PTFE : 1,7 %.

Exemple 5 :

On met en oeuvre une poudre de carbone dont la taille de cristallite dans la direction 002 (TC002) est 0,86 nm, dont le coefficient de graphitation G est 3,08 et dont la surface spécifique S est 260 m2/g. En conséquence W = 0,0011 x 10$^{-9}$ g/m.

Le diamètre moyen $D_1$ des particules de poudre est de 85 nm.

Des électrodes de nickel "e" ne faisant pas partie de l'invention sont réalisées en utilisant une pâte dont la composition exprimée en pourcentage pondéral par rapport au poids de la pâte est approximativement la suivante :

- poudre d'hydroxyde dont le diamètre moyen D est de 12 µm, composé majoritairement de nickel, contenant environ 2 % d'hydroxyde de cobalt syncristallisé et environ 3 % d'hydroxyde de zinc syncristallisé : 66 %,
- poudre de carbone : 8 %
- eau : 28 %
- gel à base de CMC : 0,3 %
- PTFE : 1,7 %.

Exemple 6 :

On met en oeuvre une poudre de carbone dont la taille de cristallite dans la direction 002 (TC002) est 1,49 nm, dont le coefficient de graphitation G est 1,25 et dont la surface spécifique S est 110 m$^2$/g. En conséquence W = 0,011 x 10$^{-9}$ g/m.

Le diamètre moyen $D_1$ des particules de poudre est de 25 nm.

Des électrodes de nickel "f" ne faisant pas partie de l'invention sont réalisées en utilisant une pâte dont la composition exprimée en pourcentage pondéral par rapport au poids de la pâte est approximativement la suivante :

- poudre d'hydroxyde dont le diamètre moyen D est de 12 µm, composé majoritairement de nickel, contenant environ 2 % d'hydroxyde de cobalt syncristallisé et environ 3 % d'hydroxyde de zinc syncristallisé : 66 %,
- poudre de carbone selon l'invention : 8 %
- eau : 28 %
- gel à base de CMC : 0,3 %
- PTFE : 1,7 %.

On assemble des accumulateurs nickel-hydrure métallique Ni-MH étanches notés A, comportant respectivement les électrodes a à f précédemment préparées. Chaque électrode positive est accolée à une électrode négative surcapacitive à alliage hydrurable de type connu. Les électrodes positives et négatives sont séparées par une couche de polypropylène non-tissé. Le faisceau est alors imprégné d'un électrolyte alcalin qui est une solution aqueuse de potasse KOH 7,4N, de lithine LiOH 0,5N et de soude caustique NaOH 0,4N. On obtient respectivement les accumulateurs Aa, Ab, Ac, Ad, Ae, Af.

PREMIERE SERIE DE TESTS

Pour caractériser la résistance à l'oxydation des différents réseaux conducteurs, après un repos de 48 heures, les accumulateurs sont testés à 20°C dans les conditions suivantes :

- Cycle 1 : Charge à 0,1 lc pendant 10 heures à 20°C, où lc est le courant nécessaire pour décharger la capacité nominale d'un accumulateur en 1 heure ; Décharge à 0,2 lc jusqu'à une tension d'arrêt de 1 volt ;
- Cycle 2 : Charge à 0,2 lc pendant 5 heures à 20°C ; surcharge permanente à C/50 pendant 1 mois à 20°C. Ce test permet de simuler la durée de vie en cyclage des éléments NiMH durant environ 200 cycles.

Les poudres ou fibres de carbones utilisées dans les électrodes positives des accumulateurs NiMH peuvent se dégrader et conduire par oxydation à une perte de conductivité de l'électrode et à la formation de carbonates dans l'électrolyte. Pour mesurer la stabilité de ces composés conducteurs, les accumulateurs sont alors démontés et le taux de carbonates présent dans l'électrolyte est mesuré par titration acido-basique.

Les résultats sont regroupés dans le tableau 1.

Tableau 1

| SERIE | $A_a$ | $A_b$ | $A_c$ | $A_d$ | $A_e$ | $A_f$ |
|---|---|---|---|---|---|---|
| W (10$^{-9}$ g/m) | | 6,5 | 1,4 | 0,028 | 0,0011 | 0,011 |
| Pourcentage de $CO_3^{2-}$ après cyclage | 19,5 | 19,5 | 21,3 | 22,3 | 37,6 | 29,9 |

On comprend d'après ces résultats que les accumulateurs Ab à Ad selon l'invention présentent des taux de carbonatation peu différents par rapport à l'accumulateur standard Aa, ce qui signifie que les carbones utilisés dans les électrodes positives de ces accumulateurs résistent d'une manière satisfaisante à l'oxydation électrochimique.

Au contraire, les accumulateurs Ae et Af dont le critère W vaut respectivement 0,0011 et 0,011 présentent des taux de carbonatation 93 % et 53 % plus élevés que l'électrode standard, qui rendent leur réseau conducteur impropre à une utilisation en accumulateur.

DEUXIEME SERIE DE TESTS

Des accumulateurs Aa à Ad identiques aux précédents sont testés dans les conditions suivantes :

Après un repos de 48 heures, les accumulateurs de capacité nominale Cn sont soumis à un test de cyclage électrochimique :

- Cycle 1 : Charge à 0,1 lc pendant 10 heures à 20°C, où lc est le courant nécessaire pour décharger la capacité nominale d'un accumulateur en 1 heure ; Décharge à 0,2 lc jusqu'à une tension d'arrêt de 1 volt ;
- Cycles 2 à 10 : Charge à 0,2 lc pendant 7,5 heures à 20 °C ; Décharge à 0,2 lc jusqu'à 1 volt.

Les accumulateurs sont alors stockés à l'état déchargé à température ambiante.

Au bout d'environ deux mois, on observe que la tension de l'accumulateur est devenue inférieure à la tension de stabilité de l'oxyhydroxyde de nickel (1,05V).

Après 6 mois de stockage, on effectue une mesure de la capacité restante dans les conditions suivantes :

- Cycles 11 à 16 : Charge à 0,2 lc pendant 7,5 heures à 20°C ; Décharge à 0,2 lc jusqu'à 1 volt.

Les pertes de capacités en stockage sont exprimées comme le ratio des capacités massiques mesurées au cycle 16 sur les capacités massiques mesurées au cycle 10. Les résultats sont rassemblés dans le tableau 2. On peut constater que les pertes de capacités irréversibles dues au stockage prolongé de l'accumulateur pour une électrode standard contenant un oxyde de cobalt et du cobalt métallique sont de 12 %. Au contraire, les accumulateurs Ab à Ad ne présentent pas de pertes de capacité en stockage.

Tableau 2

| SERIE | $A_a$ | $A_b$ | $A_c$ | $A_d$ |
|---|---|---|---|---|
| W ($10^{-9}$ g/m) | | 6,5 | 1,4 | 0,028 |
| Capacité au cycle 16/ capacité au cycle 10 | 0,88 | 1 | 1 | 1 |

Il est donc avantageux de remplacer totalement les composés de cobalt par des particules ou des fibres de carbone ; mais le cas échéant le remplacement peut être partiel.

Bien entendu l'invention n'est pas limitée aux modes de réalisation qui viennent d'être décrits, on pourra, sans sortir de cadre de l'invention remplacer tout moyen par un moyen équivalent.

## Revendications

1. Electrode au nickel empâtée pour accumulateur à électrolyte alcalin comportant un collecteur de courant et une matière active à base d'hydroxyde de nickel sous forme pulvérulente et un conducteur à base de carbone, **caractérisée par le fait que** ledit conducteur à base de carbone est formé de particules de carbone résistant à l'oxydation électrochimique et répondant à la relation

   W > 0,025 exprimé en $10^9$ g/m, avec
   W = TC002/S x G où

   - TC002 est la taille de cristallite [002] du diagramme de diffraction des rayons X, exprimée en nanomètres
   - S est la surface spécifique des particules exprimée en $m^2$/g
   - G est le coefficient de graphitation du carbone défini comme :

   $$G = (d002-0,3354) / (0,3450 - 0,3354)$$

   - d002 est la distance réticulaire dans la direction 002 en nanomètres.
     lesdites particules ayant une forme choisie parmi

- une forme sensiblement sphérique, leur diamètre moyen $D_1$ étant inférieur ou égale à D/20, et
- une forme de fibres, leur diamètre moyen $D_2$ étant inférieur ou égal à D et leur longueur moyenne $L_2$ étant supérieure ou égale à 25 fois la valeur de $D_2$,

D étant le diamètre moyen des grains de poudre de ladite matière active.

2. Electrode selon la revendication 1, **caractérisée par le fait que** lesdites particules de carbone représentent une proportion comprise entre 4 et 15 % en poids de la matière active de l'électrode positive.

3. Electrode selon l'une des revendications 1 et 2, **caractérisée par le fait que** lesdites particules ont une forme sensiblement sphérique avec un diamètre moyen $D_1$ inférieur ou égal à D/20, D étant le diamètre moyen des grains de poudre de ladite matière active, $D_1$ étant inférieur ou égal à D/100.

4. Electrode selon l'une des revendications 1 et 2, **caractérisée par le fait que** lesdites particules ont la forme de fibres dont le diamètre moyen $D_2$ est inférieur ou égal à D, D étant le diamètre moyen des grains de poudre de ladite matière active, et dont la longueur moyenne $L_2$ est supérieure ou égale à 25 fois la valeur de $D_2$, la longueur moyenne $L_2$ étant supérieure ou égale à 75 fois la valeur de $D_2$.

5. Electrode selon l'une des revendications 3 et 4, **caractérisée par le fait que** D est compris entre 5 et 15 $\mu$m.

6. Electrode selon la revendication 5, **caractérisée par le fait que** $D_1$ est inférieure ou égale à 0,1 $\mu$m.

7. Electrode selon la revendication 1, **caractérisée par le fait que** ledit hydroxyde de nickel est un hydroxyde contenant principalement du nickel mais également au moins un hydroxyde syncristallisé d'un élément choisi parmi le cobalt, le manganèse et au moins un hydroxyde syncristallisé d'un élément choisi parmi le cadmium, le zinc, le magnésium, le calcium, l'yttrium, le cuivre, l'aluminium.

8. Electrode selon l'une des revendications précédentes, **caractérisée par le fait que** ledit collecteur de courant est une mousse de nickel.

9. Electrode selon l'une des revendications précédentes, **caractérisée par le fait que** ladite matière active contient un premier liant à base de polytétrafluoroéthylène (PTFE) et un deuxième liant choisi parmi la carboxyméthylcellulose (CMC), l'hydroxypropylméthylcellulose (HPMC), l'hydroxyethylcellulose (HEC), l'hydroxypropylcellulose (HPC), le polyfluorure de vinylidène (PVDF), le SBR.

**Claims**

1. A pasted nickel electrode for a storage cell having an alkaline electrolyte, the electrode comprising a current collector and an active mass based on nickel hydroxide in powder form together with a carbon-based conductor, the electrode being **characterized by** the fact that said carbon-based conductor is made up of particles of carbon that withstand electrochemical oxidation and that satisfy the following relationship:

W > 0.025 in units of $10^{-9}$ g/m, where
W = TC002/S x G, where

   · TC002 is the size of the [002] crystallite on the X-ray diffraction pattern expressed in nanometers;
   · S is the specific surface area of the particles expressed in $m^2$/g;
   · G is the graphitization coefficient of the carbon defined as follows:

$$G = (d002-0.3354)/(0.3450 - 0.3354)$$

   · d002 is the lattice constant in the 002 direction in nanometers,

said particles being either:

   · substantially spherical in shape, their mean diameter $D_1$ being less than or equal to D/20; or

· in the form of fibers, their mean diameter $D_2$ being less than or equal to D, and their mean length $L_2$ being greater than or equal to 25 times the value of $D_2$, D being the mean diameter of powder grains of said active material.

2. An electrode according to claim 1, **characterized by** the fact that said carbon particles constitute a fraction lying in the range 4% to 15% by weight of the active material of the positive electrode.

3. An electrode according to claim 1 or 2, **characterized by** the fact that said particles are substantially spherical in shape with a mean diameter $D_1$ less than or equal to D/20, D being the mean diameter of the powder grains of said active material, $D_1$ being less than or equal to D/100.

4. An electrode according to claim 1 or 2, **characterized by** the fact that said particles are in the form of fibers having a mean diameter $D_2$ less than or equal to D, D being the mean diameter of the powder grains of said active material, and having a mean length $L_2$ greater than or equal to 25 times the value of $D_2$, the mean length $L_2$ being greater than or equal to 75 times the value of $D_2$.

5. An electrode according to claim 3 or claim 4, **characterized by** the fact that D lies in the range 5 µm to 15 µm.

6. An electrode according to claim 5, **characterized by** the fact that $D_1$ is less than or equal to 0.1 µm.

7. An electrode according to claim 1, **characterized by** the fact that said nickel hydroxide is a hydroxide containing mainly nickel but also at least one syncrystallized hydroxide of an element selected from cobalt, and manganese, and at least one syncrystallized hydroxide of an element selected from cadmium, zinc, magnesium, calcium, yttrium, copper, and aluminum.

8. An electrode according to any preceding claim, **characterized by** the fact that said current collector is a nickel foam.

9. An electrode according to any preceding claim, **characterized by** the fact that said active material contains a first binder based on polytetrafluoroethylene (PTFE), and a second binder selected from: carboxymethylcellulose (CMC); hydroxypropylmethylcellulose (HPMC); hydroxyethylcellulose (HEC); hydroxypropylcellulose (HPC); polyvinylidene fluoride (PVDF), and styrene butadine rubber (SBR).

**Patentansprüche**

1. Nickelpastenelektrode für eine Speicherbatterie mit alkalischem Elektrolyten mit einem Stromkollektor und einem aktiven Material auf der Basis von Nickelhydroxid in Pulverform und einem Leiter auf Kohlenstoffbasis, **dadurch gekennzeichnet, dass** der Leiter auf Kohlenstoffbasis aus Kohlenstoffpartikeln gebildet ist, die der elektrochemischen Oxidation widerstehen und der Beziehung genügen

W > 0,025 ausgedrückt in $10^{-9}$ g/m mit
W = TC002/S x G worin

- TC002 die Kristallitgröße [002] des Röntgenstrahldiffraktionsdiagramms, ausgedrückt in Nanometer, ist
- S die spezifische Oberfläche der Partikel, ausgedrückt in $m^2$/g, ist
- G der Graphitierungskoeffizient des Kohlenstoffs ist, welcher definiert ist als:

$$G = (d002-0,3354)/(0,3450-0,3354)$$

- d002 der Netzabstand in der Richtung 002 in Nanometer ist,

wobei die genannten Partikel eine Form haben, die gewählt ist aus

- einer im wesentlichen sphärischen Form, wobei ihr mittlerer Durchmesser $D_1$ kleiner oder gleich D/20 ist, und
- einer Faserform, wobei ihr mittlerer Durchmesser $D_2$ kleiner oder gleich D ist und ihre mittlere Länge $L_2$ größer oder gleich dem 25-fachen des Werts von $D_2$ ist, wobei D der mittlere Durchmesser der Pulverkörner des aktiven Materials ist.

**2.** Elektrode nach Anspruch 1, **dadurch gekennzeichnet, dass** die Kohlenstoffpartikel einen Anteil darstellen, der zwischen 4 und 15 Gewichtsprozent des aktiven Materials der positiven Nickelelektrode ausmacht.

**3.** Elektrode nach einem der Ansprüche 1 und 2, **dadurch gekennzeichnet, dass** die Partikel eine im wesentlichen sphärische Form haben, mit einem mittleren Durchmesser $D_1$ von kleiner oder gleich D/20, wobei D der mittlere Durchmesser der Pulverkörner des aktiven Materials ist, wobei $D_1$ kleiner oder gleich D/100 ist.

**4.** Elektrode nach einem der Ansprüche 1 und 2, **dadurch gekennzeichnet, dass** die Partikel eine Faserform haben, deren mittlerer Durchmesser $D_2$ kleiner oder gleich D ist, wobei D der mittlere Durchmesser der Pulverkörner des aktiven Materials ist. und deren mittlere Länge $L_2$ größer oder gleich dem 25-fachen des Werts von $D_2$ ist.

**5.** Elektrode nach einem der Ansprüche 3 und 4. **dadurch gekennzeichnet, dass** D zwischen 5 und 15 µm liegt.

**6.** Elektrode nach Anspruch 5, **dadurch gekennzeichnet, dass** $D_1$ kleiner oder gleich 0,1 µm ist.

**7.** Elektrode nach Anspruch 1, **dadurch gekennzeichnet, dass** das Nickelhydroxid ein Hydroxid ist, das hauptsächlich Nickel enthält, jedoch gleichermaßen ein synkristallisiertes Hydroxid eines Elements, gewählt aus Kobalt, Mangan und wenigstens ein synkristallisiertes Hydroxid eines Elements, gewählt aus Kadmium, Zink, Magnesium, Kalzium, Yttrium, Kupfer, Aluminium.

**8.** Elektrode nach einem der vorhergehenden Ansprüche, **dadurch gekennzeichnet, dass** der Stromkollektor ein Nickelschaum ist.

**9.** Elektrode nach einem der vorhergehenden Ansprüche, **dadurch gekennzeichnet, dass** das aktive Material ein erstes Bindemittel auf Basis von Polytetrafluorethylen (PTFE) und ein zweites Bindemittel, gewählt aus Carboxymethylcellulose (CMC). Hydroxypropylmethylcellulose (HPMC), Hydroxyethylcellulose (HEC), Hydroxypropylcellulose (HPC), Polyvinylidentluorid (PVDF), Butadien-Styren-Gummi SBR enthält.